# EUROPEAN PATENT SPECIFICATION

(11) **EP 0 580 930 B1**
(45) Date of publication and mention of the grant of the patent: **20.11.1996**
(21) Application number: 92870114.3
(22) Date of filing: 31.07.1992
(51) Int. Cl.: C08F 10/02

(54) **Process for producing polyethylene having a broad molecular weight distribution**
Verfahren zur Herstellung eines Polyäthylens mit breiter Molekulargewichtsverteilung
Procédé de préparation de polyéthylène à distribution de poids moléculaire large

(43) Date of publication of application: 02.02.1994
(73) Proprietor: FINA RESEARCH S.A., B-7181 Seneffe (Feluy) (BE)
(72) Inventor: Debras, Guy, B-6210 Les Bons Villers (BE)

(56) References cited:
- EP-A- 0 057 420
- EP-A- 0 274 536

## Description

The present invention concerns a process for producing polyethylene having a broad molecular weight distribution. More particularly, the present invention relates to the production of high density polyethylene having a broad or bimodal molecular weight distribution.

For high density polyethylene, hereinafter referred to as polyethylene, the molecular weight distribution (MWD) is one of the basic properties that determines the properties of the polymer, and thus its end-uses.

Although it may be difficult to evaluate the influence of each property taken independently, it is generally accepted that the molecular weight mostly determines the mechanical properties while the molecular weight dispersion mostly determines the rheological properties.

There is a demand for high molecular weight polyethylene, because an increase of the molecular weight normally improves the physical properties of the resins. However, high molecular weights tend to make polymers harder to process. On the other hand, an increase in the MWD tends to improve the flowability at high shear rate during the processing. Thus, broadening the MWD is one way to improve the processing of high molecular weight (= low melt flow index) polyethylene, in applications requiring fast processing at fairly high die swell, such as in blowing and extrusion techniques.

Some believe that, in polyethylene having a high molecular weight combined with a broad MWD, the lower molecular weight portion aids in processing while the higher molecular weight portion contributes to the good impact resistance of the film, such polyethylene can be processed at higher throughput rate with lower energy requirements. The MWD may be described completely by the curve obtained by gel permeation chromatography. However, a good evaluation, also called the polydispersity index, is represented by the ratio of the weight average to the number average molecular weight.

Depending on the applications, the required MWD will range from 10 to 30.

It was first proposed to prepare polyethylene having broad MWD by blending polyethylenes having different molecular weights in order to obtain the advantages of a broad distribution, however, the results were not satisfactory.

It has also been proposed to use several reactors connected in series.

For this purpose a process is known for the preparation of polymodal ethylene polymer in which ethylene is polymerized in two stages in the presence of a halogen-containing organoaluminum compound, a transition metal compound and different amounts of hydrogen in each stage (GB 1233599).

A process is furthermore known for the preparation of olefin polymers by a two-stage polymerization, a highmolecular polymer being prepared in the first stage at a low H₂/C₂H₄ ratio and a low-molecular polymer being prepared in the second stage at high H₂/C₂H₄ ratio (EP-A 57,352). The catalyst used is, inter alia, a halogen-containing organoaluminum compound together with the reaction product of an oxygen-containing organomagnesium compound and an oxygen-containing organotitanium compound, both of which are in solution, and an aluminum halide.

Both known processes give polyolefins with a good processability and good physical properties. Film produced from these polyolefins shows only few fish eyes.

It has also been proposed a process to polymerize ethylene in two stages according to which the pressure in the second reactor is kept lower than in the first one; the polymerization is carried out in the presence of usual Ziegler-Natta catalyst such as a transition metal catalyst supported on a solid carrier and an organoaluminum compound. Examples of such processes are described in US patents 4,414,369 and 4,338,424.

However, the ethylene polymers obtained with such process are not very convenient as regard to their mechanical properties.

EP-A-57420 discloses a process for producing an ethylene (co-)polymer by the slurry type polymerization by using a catalyst system comprising a supported Ziegler catalyst and an organometallic cocatalyst in the presence of hydrogen as molecular weight regulator in two reaction zones connected in series and kept full with the liquid phase wherein the high molecular weight polymer particles are produced in the first reaction zone and the low molecular weight polymer particles are produced in the second reaction zone. The resulting polymer is said to exhibit desirable physical properties and processability.

EP-A-274536 discloses a polyolefin composition for injection molding which comprises a super-high molecular weight (MW) polyethylene having a MW of 1,650,000 or more and a polyethylene having a MW comprised between 1,500 and 360,000. This composition is produced by a multi-stage polymerization process involving a step of producing super-high MW polyethylene and a step of producing low MW or high MW polyethylene.

It is therefore an object of the present invention to provide a process to polymerize ethylene to form ethylene polymers with good processability, good physical properties and diverse applicability and which are easy to carry out.

It has been found that this object can be achieved with a two-stage process involving specific operating conditions, that is liquid full loop reactors.

### SUMMARY OF THE INVENTION

It has now been found that polyalkenes with a wide molecular weight distribution and a very good homogeneity can be obtained by the process of co-polymerizing ethylene with at most 20 mole % of one or more other alpha-alkene of 3 to 10 carbon atoms, in two liquid full loop reactors in series at a temperature of 50 to 120°C, preferably 60 to 110°C under an absolute pressure of 1 to 100 bar in the presence of a catalyst consisting of a transition metal component (component A) which is the reaction product of an organomagnesium compound with a titanium compound and an organoaluminum compound (compound B), the average molecular mass being regulated with hydrogen, which process comprises carrying out the polymerization such that the introduction of the co-monomer is carried out essentially in the first reactor and that the hydrogen concentration is at a very low concentration in the first reactor to form ethylene polymers having HLMI between 0.01 and 5g/10', while maintaining a very high hydrogen pressure in the second reactor to form ethylene polymers having a HLMI higher than 5g/10'.

As transition metal compounds suitable for the preparation of component A, there are used tetravalent halogenated titanium compounds, preferably titanium compounds of the general formula TiXₙ(OR)₄₋ₙ in which n is 1 to 4, X stands for chlorine or bromine, and R for identical or different hydrocarbon radicals, especially straight-chain or branched alkyl groups having 1 to 18, preferably 1 to 10, carbon atoms.

Examples thereof are
TiCl₄, Ti(OC₂H₅)₂Cl₂,Ti(OC₂H₅)₃Cl,Ti(OC₃H₇)₂Cl₂,Ti(OC₃H₇)₃Cl,
Ti(OiC₃H₇)₂Cl₂, Ti(OiC₃H₇)₃Cl, Ti(OiC₄H₉)₂Cl₂, Ti(OiC₄H₉)₃Cl

In some cases, it may be advantageous to prepare the halogeno-ortho-titanic acid esters of the above formula in situ by reacting the respective ortho-titanic acid ester with TiCl₄ in a corresponding proportion.

This reaction is advantageously carried out at temperatures of from 0 to 200° C., the upper temperature limit being determined by the decomposition temperature of the tetravalent halogenated titanium compound used; it is advantageously carried out at temperatures of from 60 to 120° C.

The reaction may be effected in inert diluents, for example aliphatic or cycloaliphatic hydrocarbons as are currently used for the low pressure process such as butane, pentane, hexane, heptane, cyclohexane, methyl-cyclohexane as well as aromatic hydrocarbons, such as benzene or toluene; hydrogenated Diesel oil fractions which have been carefully freed from oxygen, sulfur compounds and moisture are also useful.

Subsequently, the reaction product of magnesium alcoholate and tetravalent halogenated titanium compound which is insoluble in hydrocarbons is freed from unreacted titanium compound by washing it several times with one of the above inert diluents in which the titanium-(IV)-compound used is readily soluble.

For preparing component A, magnesium alcoholates, preferably those of the general formula Mg(OR)₂ are used, in which R stands for identical or different hydrocarbon radicals, preferably straight-chain or branched alkyl groups having 1 to 10 carbon atoms; magnesium alcoholates having alkyl groups of from 1 to 4 carbon atoms are preferred. Examples thereof are Mg(OCH₃)₂, Mg(OC₂H₅)₂, Mg(OC₃H₇)₂, Mg(OiC₃H₇)₂, Mg(OC₄H₉)₂, Mg(OiC₄H₉)₂, Mg(OCH₂-CH₂-C₆H₅)₂.

The magnesium alcoholates can be prepared by known methods, for example by reacting magnesium with alcohols, especially monohydric aliphatic alcohols.

Magnesium alcoholates of the general formula X-Mg-OR in which X stands for halogen, (SO₄)_{1/2} carboxylate, especially acetate or OH, and R has the above meaning, may also be used.

These compounds are, for example, obtained by reacting alcoholic solutions of the corresponding anhydrous acids with magnesium.

The titanium content of component A may be within the range of from 0.05 to 10mg.-atom, per gram of component A. It can be controlled by the reaction time, the reaction temperature and the concentration of the tetravalent halogenated titanium compound used.

The concentration of the titanium component fixed on the magnesium compound is advantageously in the range of from 0.005 to 1.5 mmol, preferably from 0.03 to 0.8mmol, per litre of dispersing agent or reactor volume. Generally, even higher concentrations are possible.

The organo-aluminum compounds used may be reaction products of aluminum-trialkyl or aluminum-dialkyl hydrides with hydrocarbon radicals having 1 to 16 carbon atoms, preferably Al(iBu)₃ or Al(iBu)₂H and diolefins containing 4 to 20 carbon atoms, preferably isoprene; for example aluminum isoprenyl.

Furthermore, suitable as component B are chlorinated organo-aluminum compounds, for example dialkyl-aluminum monochlorides of the formula R₂AlCl or alkyl-aluminum sesquichlorides of the formula R₃Al₂Cl₃, in which formulae R stands for identical or different hydrocarbon radicals, preferably alkyl groups having 1 to 16 carbon atoms, preferably 2 to 12 carbon atoms, for example (C₂H₅)₂AlCl, (iC₄H₉)₂AlCl, (C₂H₅)₃Al₂Cl₃.

It is advantageous to use, as component B, aluminum-trialkyls of the formula AlR₃ or aluminum-dialkyl hydrides of the formula AlR₂H, in which formulae R stands for identical or different hydrocarbons, preferably alkyl groups having 1 to 16, preferably 2 to 6, carbon atoms, for example Al(C₂H₅)₃, Al(C₂H₅)₂H, Al(C₃H₇)₃, Al(C₃H₇)₂H, Al(iC₄H₉)₃, or Al(iC₄H₉)₂H.

The organoaluminum may be used in a concentration of from 0,5 to 10 mmol per litre of reactor volume.

The polymerization of ethylene is carried out slurry in two liquid full loop reactors connected in series.
As already indicated, it has been found that it is essential to introduce the alpha-olefin comonomer in the first reator.
As comonomer which may be used in the present process, alpha-olefin having from 3 to 10 carbon may be cited, and preferably 1-hexene is used.

Ethylene is injected with the comonomer in the first loop reactor together the precontacted catalyst. Optionally the catalyst may comprise an usual electron-donor such as isoalkylphthalate.
The polymerisation is carried out at a temperature of from 50 to 120°C, preferably from 60 to 110°C at a pressure of 1 to 100 bar, and preferably 30 to 50 bar.
The residence time in the first reactor, may be shorter or larger than in the second reactor, depending on the HMW/LMW ratio desired for the end polymer. The hydrogen is maintained at a low concentration comprised between 0.005-0.07 vol% in the first reactor and between 0.5-2.2 vol% in the second reactor.

The ethylene polymer stream obtained in the first reactor is transferred in the second loop reactor. The polymerization is pursued at a pressure comprised between 30 and 50 bar; at a temperature between 50 and 100°C and preferably between 80 and 110°C. The residence time is generally comprised between 0.5 and 1 hour.

Under the polymerization conditions, it has been found that the high molecular weight part of the polymer is formed in the first reactor. Generally, this part represents from 10 to 90% and preferable 30 to 70wt% of the bimodal polymer.

One of the feature of the present invention resides in the fact that the ethylene, catalyst and comonomer are injected in the first reactor leads to better mechanical properties.

The following examples are given to illustrate the process of the invention without limiting its scope.

### Examples 1 to 6

The polymerisation of ethylene was carried out in two liquid full loop reactors connected in series, in accordance with the polymerization process described hereabove, under the conditions specified in table 1.
Isobutane (35 gk/h) is used as diluant. Tibal concentration is given with regard to iC₄ amount.
Physical and mechanical (flexural modulus, ESCR) properties for the final product are also summarized in table 1.

### Comparative example 7

The polymerization of ethylene was carried out in a single reactor under reaction conditions indicated in table 1. The properties of the monomodal resin obtained are also described in the same table.
We obtain a better ESCR-Flexural Modulus compromise with the bimodal resins.

**TABLE 1**

| Examples | 1 | 2 | 3 | 4 | 5 | 6 | 7 |
|---|---|---|---|---|---|---|---|
| 1st reactor | | | | | | | |
| Temp. (°C) | 75 | 75 | 70 | 71 | 71 | 75 | 90 |
| Tibal (ppm) | 350 | 350 | 350 | 350 | 350 | 350 | 525 |
| C2- (kg/h) | 3 | 2.5 | 4 | 3.9 | 4 | 4 | 8.4 |
| C6- (cc/h) | 230 | 300 | 250 | 250 | 150 | 150 | 270 |
| H2 (Nl/h) | 2.1 | 1.2 | 10 | 10 | 10.5 | 10.5 | 60 |
| Resid.time (min) | 70 | 70 | 70 | 70 | 70 | 70 | 60 |

| 2nd reactor | | | | | | | |
|---|---|---|---|---|---|---|---|
| Temp. (C°) | 95 | 95 | 95 | 95 | 95 | 95 | |
| Tibal (ppm) | 350 | 350 | 350 | 350 | 350 | 350 | |
| C2- (kg/h) | 5 | 5.5 | 4 | 4 | 4 | 4 | |
| H2 (Nl/h) | 300 | 150 | 300 | 300 | 300 | 250 | |
| Resid.time (min) | 35 | 35 | 35 | 35 | 35 | 35 | |

| OFF GAS | | | | | | | |
|---|---|---|---|---|---|---|---|
| C2- (wt%) | 4.6 | 4.7 | 4.5 | 4.4 | 4.6 | 4.3 | 4.3 |
| C6- (wt%) | 0.17 | 0.21 | 0.27 | 0.22 | 0.13 | 0.14 | 0.34 |
| H2 (vol%) | 1.9 | 0.9 | 1.8 | 1.9 | 1.94 | 1.6 | 0.33 |

| Product from 1st reactor | | | | | | | |
|---|---|---|---|---|---|---|---|
| HLMI (g/10') | 0.29 | 0.22 | 0.77 | 1.67 | 1.42 | 2.4 | |
| Density (g/cc) | 0.933 | 0.925 | 0.942 | 0.940 | 0.944 | 0.946 | |
| HMW Part(w%) | +/-50 | +/-40 | +/-60 | +/-60 | +/-60 | +/-60 | |

| Final product | | | | | | | |
|---|---|---|---|---|---|---|---|
| HLMI (g/10') | 14.8 | 17.1 | 13.3 | 22.5 | 15.9 | 18.9 | 11 |
| MI2 (g/10') | 0.09 | 0.17 | 0.1 | 0.2 | 0.15 | 0.17 | 0.19 |
| Density (g/cc) | 0.952 | 0.950 | 0.952 | 0.954 | 0.953 | 0.955 | 0.952 |
| Mn (kDa) | 13 | 17 | 15.9 | 14.4 | 13.9 | 15.1 | 26 |
| Mw (kDa) | 230 | 206 | 238 | 208 | 208 | 195 | 173 |
| Mz (kDa) | 1837 | 1525 | 1899 | 1780 | 1622 | 1480 | 1027 |
| MWD | 17.2 | 12.1 | 15.0 | 14.8 | 14.9 | 12.9 | 6.7 |

| FLEXURAL MODULUS | | | | | | | |
|---|---|---|---|---|---|---|---|
| at 0.4% (mPA) | 1520 | 1480 | 1570 | 1490 | 1520 | 1520 | 1420 |

| ESCR | | | | | | | |
|---|---|---|---|---|---|---|---|
| Bell 50°C 100%(h) | Fo>300 | Fo>300 | 186 | 140 | 150 | 130 | 53 |

## Claims

1. Process for co-polymerizing ethylene with at most 20 mole % of one or more other alpha-alkene of 3 to 10 carbon atoms, in two liquid full loop reactors in series at a temperature of 50 to 120°C, preferably 60 to 110°C under an absolute pressure of 1 to 100 bar in the presence of a catalyst consisting of a transition metal component (component A) which is the reaction product of an organomagnesium compound with a titanium compound, an organoaluminium compound (component B), and optionally one or more electron donor, the average molecular mass being regulated with hydrogen, which process comprises carrying out the polymerization such that the introduction of the co-monomer is carried out essentially in the first reactor and that the hydrogen concentration is at a very low concentration in the first reactor to form ethylene polymers having HLMI between 0.01 and 5g/10', and that a very high hydrogen pressure is maintained in the second reactor to form ethylene polymers having a HLMI higher than 5g/10'.

2. The process of claim 1, wherein the hydrogen concentration is of 0.005 to 0.07 vol % in the first reactor and of 0.5 - 2.2 vol % in the second reactor.

3. The process of claim 1, wherein the residence time in the first reactor is adjusted to produce 30 to 70 vol % of the total polymer.

## Patentansprüche

1. Verfahren zum Copolymerisieren von Äthylen mit höchstens 20 Molprozent einer oder mehrerer anderer α-Alkenen mit von 3 bis 10 Kohlenstoffatomen in zwei hintereinander angeordneten mit Flüssigkeit gefüllten Schlaufenreaktoren bei einer Temperatur von 50 bis 120°C, vorzugsweise von 60 bis 110°C, und unter einem absoluten Druck von 1 bis 100 Bar in Gegenwart eines Katalysators bestehend aus einer Übergangsmetallkomponente (Komponente A), die aus der Reaktion zwischen einer Organomagnesiumverbindung und einer Titanverbindung, einer Organoaluminiumverbindung (Komponente B) und gegebenenfalls einem oder mehreren Elektronenspendern entsteht, wobei die durchschnittliche Molekularmasse mittels Wasserstoff reguliert wird, welches Verfahren beinhaltet, die Polymerisation so durchzuführen, daß die Einführung des Comonomers vorwiegend im ersten Reaktor stattfindet und die Wasserstoffkonzentration im ersten Reaktor sehr schwach ist, um so ein Äthylenpolymer zu bilden mit einem Schmelzfluß-Index (HLMI) zwischen 0,01 und 5g/10', und daß ein sehr großer Wasserstoffdruck im zweiten Reaktor aufrechterhalten bleibt, der es ermöglicht Äthylenpolymere herzustellen mit einem Schmelzfluß-Index (HLMI), der höher liegt als 5g/10'.

2. Das Verfahren nach Anspruch 1, bei dem die Wasserstoffkonzentration im ersten Reaktor 0,005 bis 0,07 Vol.% beträgt und im zweiten Reaktor 0,5 bis 2,2 Vol.%.

3. Das Verfahren nach Anspruch 1, bei dem die Verweilzeit im ersten Reaktor so eingestellt wird, daß dort 30 bis 70 Vol.% der gesamten Polymermenge hergestellt werden.

## Revendications

1. Procédé de copolymérisation d'éthylène avec au plus 20 moles % d'une ou plusieurs autres alpha-alkènes ayant de 3 à 10 atomes de carbone, dans deux réacteurs à boucle remplis de liquide en série à une température de 50 à 120°C, de préférence de 60 à 110°C, sous une pression absolue de 1 à 100 bars, en présence d'un catalyseur consistant en un composé de métal de transition (composé A) qui est le produit de la réaction d'un composé organomagnésien avec un composé du titane, un composé organoaluminium (composé B), et en option un ou plusieurs donneurs d'électrons, la masse moléculaire moyenne étant réglée avec de l'hydrogène, le dit procédé comprenant le fait qu'on effectue la polymérisation de telle sorte que l'introduction du comonomère est effectuée essentiellement dans le premier réacteur et que la concentration en hydrogène est à une très faible concentration dans le premier réacteur pour former les polymères d'éthylène ayant un HLMI compris entre 0,01 et 5g/10', et qu'on maintient une pression en hydrogène très élevée dis le deuxième réacteur pour former des polymères d'éthylène ayant un HLMI plus grand que 5g/10'.

2. Procédé selon la revendication 1, dans lequel la concentration en hydrogène est de 0,005 à 0,07 % vol dans le premier réacteur et de 0,5 - 2,2 % vol dans le deuxième réacteur.

3. Procédé selon la revendication 1, dans lequel le temps de résidence dans le premier réacteur est ajusté pour produire 30 à 70% vol du polymère total.
